# EUROPEAN PATENT SPECIFICATION

(11) **EP 2 485 517 B1**
(45) Date of publication and mention of the grant of the patent: **14.11.2018**
(21) Application number: 10820051.0
(22) Date of filing: 06.08.2010
(51) Int. Cl.: H04W 24/02, H04W 84/04

(54) **CONFIGURATION OF A HOME BASE STATION AS A TARGET FOR MEASUREMENT BY A MOBILE STATION CONNECTED TO A MACRO BASE STATION**
KONFIGURATION EINER HEIMBASISSTATION ALS ZIEL ZUR MESSUNG DURCH EINE MOBILSTATION MIT VERBINDUNG ZU EINER MAKROBASISSTATION
CONFIGURATION D'UNE STATION DE BASE DOMESTIQUE COMME OBJECTIF DE MESURE PAR UNE STATION MOBILE CONNECTÉE À UNE STATION DE BASE MACRO

(30) Priority: 01.10.2009 JP 2009229472
(43) Date of publication of application: 08.08.2012
(73) Proprietor: NEC Corporation, Tokyo 108-8001 (JP)
(72) Inventor: AMINAKA, Hiroaki, Tokyo 108-8001 (JP); HAMABE, Kojiro, Tokyo 108-8001 (JP)
(74) Representative: MacDougall, Alan John Shaw
(86) International application number: PCT/JP2010/004975
(87) International publication number: WO 2011/039925

(56) References cited:
- EP-A1- 2 469 911
- WO-A1-2008/136418
- JP-A- 2000 092 541
- JP-A- 2008 278 265
- JP-A- 2009 124 671
- US-A1- 2007 254 620
- US-A1- 2010 246 483
- ERICSSON: "Automatic neighbour cell configuration", 3GPP DRAFT; R3-071494 AUTOMATIC NEIGHBOUR CELL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162315, [retrieved on 2007-08-15]

## Description

### Technical Field

The present invention relates to a mobile communication system including a home base station, and more specifically, to a configuration of a home base station or a cell formed by the home base station.

### Background Art

A standardization organization such as 3GPP (Third Generation Partnership Project) has promoting standardization of a small base station that can be installed in a user's house, an office or the like. This small base station is arranged in a house, a small office or the like by a user, and is connected to a core network via an access line including an ADSL (Asymmetric Digital Subscriber Line), an optical fiber line or the like. Such a small base station is generally called a femto base station, a femtocell base station, or a home base station. Further, the size (coverage area) of a cell formed by the small base station is extremely small compared to those of macrocells. Thus, the cell formed by the small base station is called a femtocell or a home cell, for example. The 3GPP defines such a small base station as a Home Node B (HNB) and a Home evolved Node B (HeNB) and has promoting standardization work. The HNB is a small base station for UTRAN (Universal Mobile Telecommunications System (UMTS) Terrestrial Radio Access Network), and the HeNB is a small base station for LTE (Long term evolution)/E-UTRAN (Evolved UTRAN).

In this specification, the small base station as stated above is referred to as a "home base station", and a cell formed by the home base station is referred to as a "home cell". The home base stations for UTRAN and E-UTRAN studied by 3GPP are referred to as an HNB or an HeNB, or collectively referred to as an H(e)NB according to the name called in 3GPP. Further, the home cell formed by the H(e)NB is referred to as an "H(e)NB cell".

In 3GPP Release 8, the H(e)NB is standardized as the base station managed by the user (see non-patent literature 1). However, it is difficult for the user to appropriately set configurations of the H(e)NB and H(e)NB cell (e.g. a radio frequency, a scrambling code/a physical cell ID, downlink transmission power). Accordingly, it is concerned that inappropriate configuration of the H(e)NB cell causes a problem of an interference between the M(e)NB cell and the H(e)NB cell. The M(e)NB cell is a macrocell generated by the M(e)NB (macro NodeB or macro eNodeB).

In order to suppress the interference between the H(e)NB cell and the M(e)NB cell, it has been considered that the H(e)NB shall have a function for autonomously setting the H(e)NB cell (referred to as self configuration, automatic configuration or the like). The radio parameters specify the characteristics of the radio communication of the H(e)NB cell, and more specifically, include a radio frequency band, a scrambling code, transmission power of a pilot signal (CPICH: Common Pilot Channel), and a maximum value of uplink transmission power by a mobile station, for example. Further, in order to achieve autonomous self configuration, it has also been considered that the H(e)NB shall have a function of receiving a downlink signal from a nearby M(e)NB cell (referred to as Network Listen Mode, Radio Environment Measurement or the like). The H(e)NB measures a radio signal from the M(e)NB cell and optimizes the radio parameters of the H(e)NB cell using the measurement result.

Another method that is proposed to suppress interference between the M(e)NB cell and the H(e)NB cell is to transmit configuration information of the H(e)NB cell to the H(e)NB from a control apparatus such as an RNC (Radio Network Controller) managed by a network operator (see non-patent literature 2). The H(e)NB adjusts radio parameters of the H(e)NB cell based on the received configuration information. This solving method is supposed to be used together with the self configuration stated above. Since the self configuration is supposed to be performed at the time of set-up of the H(e)NB, it may be possible that the setting of the H(e)NB cell cannot appropriately follow subsequent changes in the surrounding environment. Accordingly, when the H(e)NB cell is not appropriately set, it is required to prompt re-configuration of the H(e)NB cell by supplying the configuration information to the H(e)NB from a higher-level network.

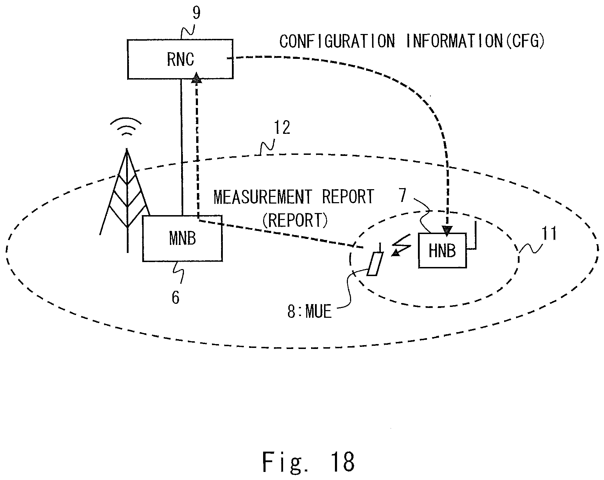

Further, in another solving method described above, it is also examined to use the measurement result of the H(e)NB cell by a mobile station (hereinafter referred to as a macro user equipment (MUE)) connected to the M(e)NB cell in order to set radio parameters of the H(e)NB cell more appropriately. Fig. 18 shows a case of supplying configuration information from an RNC 9 to an HNB 7 of UTRAN. An MUE 8 is connected to an MNB cell 12 formed by an MNB 6. The MUE 8 measures a downlink signal from an HNB cell 11, and transmits a measurement report to the RNC 9. The RNC 9 manages the MNB 6 and the MNB cell 12. The RNC 9 generates configuration information (CFG) regarding the HNB cell 11 based on the measurement result of the HNB cell 11 by the MUE 8 and supplies the configuration information to the HNB 7. The HNB 7 adjusts radio parameters of the HNB cell 11 according to the configuration information received from the RNC 9.

### Citation List

### Non Patent Literature

**NPTL 1:** 3GPP TR 25.820 v8.2.0 (2008-09), "3G Home Node B (HNB) study item Technical Report"
**NPTL 2:** 3GPP contributed article, R3-091894 "Study on Enhanced Interference Management Mechanisms for HNB", [online], 3GPP, [searched on September 19, 2009], the Internet <URL: http://www.3gpp.org/ftp/tsg_ran/WG3_Iu/TSGR3_65/Docs/R3-091894.zip>
**NPTL 3:** Ericsson: "Automatic neighbour cell configuration", 3GPP DRAFT; R3-071494 Report of RAN WG3, Athens, Greece, 15 August 2007

US 2007/254620 A1 discloses a radio access network comprising a radio network control node; a database; and a femto radio base station node serving a femtocell of the radio access network. The femto radio base station node comprises a receiver for receiving scanned cell information broadcast for one or more receivable cells of the radio access network, and a reporting unit. The reporting unit provides the scanned cell information for the one or more receivable cells of the radio access network to the radio network control node. The radio network control node is arranged, upon receipt of the scanned cell information, for providing configuration information to the femto radio base station node (for configuring the femto radio base station node) and for storing macro cell information for one or more receivable cells in the database. The macrocell information is stored in the database in association with the femto radio base station node.

WO 2008/136418 A1 discloses a mobile communication system provided with a means for gathering measurement results by making a mobile station device existing in a communication area of a discretionary base station device measure propagation status of a wireless signal transmitted from a peripheral base station device; and a means for acquiring location information of the mobile station device.

NPTL 3 discusses how manual planning and management of Neighbour Cell relations in a Radio Access Network, such as GSM and WCDMA, is resource consuming and error prone. NPTL 3 suggests that neighbour Cell relations should be automated.

EP 2 469 911 A1 (prior art falling under Article 54(3) EPC) discloses a mobile communication system wherein upstream radio channel interference of a macrocell connection terminal with a femtocell base station can be reduced while suppressing consumption of radio resources caused by increase in signaling. The macrocell connection terminal performs, based on an instruction from a macrocell base station, an upstream channel transmission and reports a peripheral-femtocell detection result to the macrocell base station. The macrocell base station instructs the terminal to perform a peripheral-femtocell detection. The identifier of the terminal and the peripheral-femtocell detection result obtained by the terminal are transmitted to a network management apparatus. An interference reduction instruction (frequency band allocation) and the identifier of the terminal to be interference-controlled are received from the network management apparatus, and the frequency band allocation in the upstream channel transmission of the terminal to be interference-controlled is so controlled as to satisfy the interference reduction instruction.

### Technical Problem

As shown in Fig. 18, when the configuration of the HNB cell is performed based on the measurement result of the HNB cell by the MUE, a problem occurs that it is difficult to determine which HNB cell the MUE should measure. If the MUE measures a large number of HNB cells for all the radio resources that are allowed to be used by the HNB cells, it may lead to an increase of power consumption and degradation of communication performance of the MUE. Accordingly, it is desirable to select an H(e)NB cell which is not appropriately set in the self configuration of the HNB itself and to perform the measurement by the MUE on the selected H(e)NB cell in a limited way.

The present invention has been made in order to deal with the problems described above. One exemplary object according to the present invention is to provide a mobile communication system, a home base station apparatus, a control apparatus, and a control method, that are able to contribute suppression of degradation of communication performance of a mobile station and an increase in power consumption in an architecture to use a measurement result of a home cell by a mobile station which is attached to a macrocell in order to generate configuration information supplied to the home base station including an H(e)NB.

### Summary of the Invention

The invention is set out in the appended set of claims.

Any references in the following description to embodiments, objects, aspects and/or examples which are not covered by the appended claims are considered as not being part of the present invention.

In a first illustrative aspect of the present invention, a mobile communication system includes at least one home base station, a macro base station, and a control apparatus. Each of the at least one home base station is configured to transmit first information including at least one of: one or more first radio parameters related to a home cell formed by that home base station, and one or more second radio parameters related to a macro cell formed by the macro base station and measured by that home base station. Further, the control apparatus is configured to instruct a mobile station connected to the macro base station to measure a radio signal that arrives from the at least one home base station, and receive a measurement result from the mobile station. Further, the control apparatus is configured to receive the first information from each of the at least one home base station, determine, from among the at least one home base station, based on the received first information, a suspected base station whose radio setting for its home cell is suspected of not being appropriately made, and select the suspected base station as a target base station which is to be measured by the mobile station. Further, the control apparatus is configured to instruct the mobile station to measure a radio signal transmitted by the target base station, and to receive a measurement result from the mobile station. Further, the control apparatus is configured to generate configuration information based on the measurement result from the mobile station and supply the configuration information to the target base station as a response to the first information, and the target base station is configured to receive the configuration information and adjust the radio setting for its home cell according to the configuration information.

In a second illustrative aspect of the present invention, a home base station apparatus includes a radio communication unit, a higher-level network communication unit, and a configuration control unit. The radio communication unit performs radio communication with a mobile station in a home cell. The higher-level network communication unit is capable of performing communication with a control apparatus in a higher-level network. The configuration control unit is adapted to transmit to the control apparatus first information including at least one of: one or more first radio parameters related to the home cell and one or more second radio parameters related to a macro cell formed by a macro base station and measured by the home base station apparatus, the first information being used by the control apparatus for determining, from among the at least one home base station including the home base station apparatus, a suspected base station whose radio setting for its home cell is suspected of not being appropriately made, and for selecting the suspected base station as a target base station which is to be measured by a mobile station connected to the macro base station different from the at least one home base station. The configuration control means is further adapted to receive configuration information supplied from the control apparatus as a response to the first information, the configuration information being generated based on a measurement result of a downlink signal from the home cell measured by the mobile station. The configuration control means is further adapted to adjust the radio setting for its home cell according to the configuration information.

In a third illustrative aspect of the present invention, a control apparatus for instructing a mobile station connected to a macro base station to measure a radio signal that arrives from at least one home base station, and receiving a measurement result from the mobile station is provided. The control apparatus includes a control unit that receives first information from each of the at least one home base station . Here, the first information from each home base station includes at least one of: one or more first radio parameters related to a home cell formed by the home base station from which the first information originates; and one or more second radio parameters related to a macro cell formed by the macro base station and measured by the home base station from which the first information originates. The control means is further adapted to determine, from among the at least one home base station, based on the received first information, a suspected base station whose radio setting for its home cell is suspected of not being appropriately made, and select the suspected base station as a target base station which is to be measured by the mobile station. The control means is further adapted to instruct the mobile station to measure a radio signal transmitted by the target base station, and to receive a measurement result from the mobile station. The control means is further adapted to generate configuration information based on the measurement result from the mobile station and supply the configuration information to the target base station as a response to the first information in order to instruct the target base station to adjust the radio setting for its home cell according to the configuration information.

In a fourth illustrative aspect of the present invention, a method of controlling a home base station apparatus configured to form a home cell is provided. The method includes transmitting to a control apparatus in a higher-level network first information including at least one of: one or more first radio parameters related to the home cell; and one or more second radio parameters related to a macro cell formed by a macro base station and measured by the home base station apparatus, the first information being used by the control apparatus for determining, from among at least one home base station including the home base station apparatus, a suspected base station whose radio setting for its home cell is suspected of not being appropriately made, and for selecting the suspected base station as a target base station which is to be measured by a mobile station connected to the macro base station different from the at least one home base station; receiving configuration information supplied from the control apparatus as a response to the first information, the configuration information being generated based on a measurement result of a downlink signal from the home cell measured by the mobile station; and adjusting the radio setting for its home cell according to the configuration information.

In a fifth illustrative aspect of the present invention, a method of controlling a control apparatus for instructing a mobile station connected to a macro base station to measure a radio signal that arrives from at least one home base station and for receiving a measurement result from the mobile station is provided. The method includes receiving first information from each of the at least one home base station, the first information from each home base station including at least one of: one or more first radio parameters related to a home cell formed by the home base station from which the first information originates; and one or more second radio parameters related to a macro cell formed by the macro base station and measured by the home base station from which the first information originates; determining, from among the at least one home base station, based on the received first information, a suspected base station whose radio setting for its home cell is suspected of not being appropriately made, and selecting the suspected base station as a target base station which is to be measured by the mobile station from among the at least one first base station; instructing the mobile station to measure a radio signal transmitted by the target base station, and receiving a measurement result from the mobile station; and generating configuration information based on the measurement result from the mobile station and supplying the configuration information to the target base station as a response to the first information in order to instruct the target base station to adjust the radio setting for its home cell according to the configuration information.

### Advantageous Effects of Invention

According to each illustrative aspect of the present invention stated above, it is possible to provide a mobile communication system, a base station apparatus, a control apparatus, a control method, and a program that are able to contribute suppression of degradation of communication performance of a mobile station and an increase in power consumption in an architecture to use a measurement result of a home cell by a mobile station which exits in a macrocell in order to generate configuration information supplied to the home base station.

### Brief Description of Drawings

Fig. 1 is a diagram showing a network configuration example of a mobile communication system according to a first illustrative embodiment of the present invention;
Fig. 2 is a diagram showing a network configuration example (a case of UTRAN) of the mobile communication system according to the first illustrative embodiment of the present invention;
Fig. 3 is a diagram showing a network configuration example (a case of LTE/E-UTRAN) of the mobile communication system according to the first illustrative embodiment of the present invention;
Fig. 4 is a diagram showing a network configuration example (a case of UTRAN) of the mobile communication system according to the first illustrative embodiment of the present invention;
Fig. 5 is a diagram showing a network configuration example (a case of UTRAN) of a mobile communication system according to a second illustrative embodiment of the present invention;
Fig. 6 is a sequence diagram showing procedures for supplying configuration information in the mobile communication system according to the second illustrative embodiment of the present invention;
Fig. 7 is a block diagram showing a configuration example of a home base station according to the second illustrative embodiment of the present invention;
Fig. 8 is a block diagram showing a configuration example of an RNC in the mobile communication system according to the second illustrative embodiment of the present invention;
Fig. 9 is a block diagram showing a configuration example of a mobile station according to the second illustrative embodiment of the present invention;
Fig. 10 is a flowchart showing a specific example of procedures for operating the home base station according to the second illustrative embodiment of the present invention;
Fig. 11 is a flowchart showing a specific example of procedures for operating the RNC according to the second illustrative embodiment of the present invention;
Fig. 12 is a flowchart showing a specific example of procedures for operating the mobile station according to the second illustrative embodiment of the present invention;
Fig. 13 is a diagram showing a network configuration example (a case of UTRAN) of a mobile communication system according to a third illustrative embodiment of the present invention;
Fig. 14 is a sequence diagram showing procedures for supplying configuration information in the mobile communication system according to the third illustrative embodiment of the present invention;
Fig. 15 is a flowchart showing a specific example of procedures for operating a home base station according to the third illustrative embodiment of the present invention;
Fig. 16 is a flowchart showing a specific example of procedures for operating an RNC according to the third illustrative embodiment of the present invention;
Fig. 17 is a sequence diagram showing procedures for supplying configuration information in a mobile communication system according to a fourth illustrative embodiment of the present invention; and
Fig. 18 is a diagram showing a configuration example of a mobile communication system according to a related art.

### Description of Embodiments

In the following description, specific illustrative embodiments of the present invention will be described in detail with reference to the drawings. Throughout the drawings, the same components are denoted by the same reference symbols, and overlapping description will be omitted as appropriate for the sake of clarification of description.

### <First illustrative embodiment>

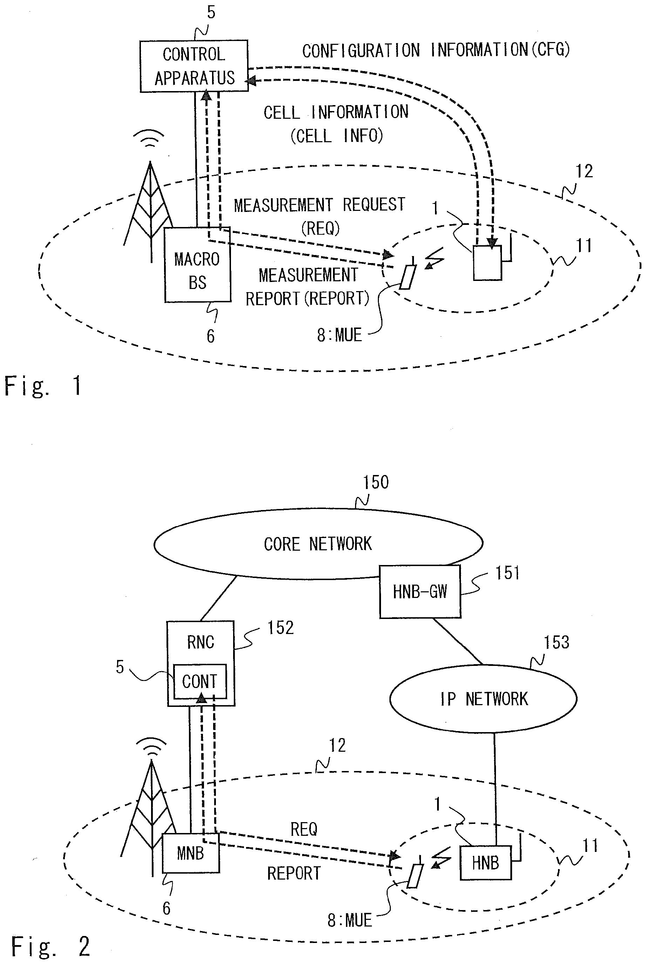

Fig. 1 is a diagram showing a network configuration example of a mobile communication system according to a first illustrative embodiment of the present invention. While only one home base station 1 is shown in Fig. 1 to simplify the explanation, plural home base stations are typically arranged in a macrocell 12. Further, each of a mobile station (not shown) connected to a home cell 11 and a mobile station 8 connected to the macrocell 12 is also generally arranged in plural number.

The home base station 1 performs bi-directional radio communication with the mobile station. Further, the home base station 1 is connected to a higher-level network (not shown) including a core network of a network operator (mobile network operator), and relays traffic between the mobile station and the higher-level network. The home cell 11 is a cell formed by the home base station 1. The home base station 1 adjusts radio parameters of the home cell 11 according to configuration information (CFG) received from a control apparatus 5 described later. The radio parameters adjusted here include, for example, a frequency band used in the home cell 11, a scrambling code, transmission power of a downlink signal, and a maximum value of uplink transmission power by the mobile station.

A macro base station 6 forms the macrocell 12 whose cell size is larger than that of the home cell 11, and performs bi-directional radio communication with the mobile station (MUE) 8. The macro base station 6 is also connected to the higher-level network (not shown), and relays traffic between the MUE 8 and the higher-level network.

The control apparatus 5 instructs the MUE 8 to measure the downlink signal that arrives from the home cell 11 by transmitting a measurement request (MEASUREMENT REQUEST) to the MUE 8. The control apparatus 5 receives from the MUE 8 a measurement report (MEASUREMENT REPORT) including the measurement result of the home cell 11. The control apparatus 5 generates configuration information (CFG) of the home cell 11 based on the measurement report from the MUE 8, and transmits the CFG to the home base station 1.

Further, the home base station 1 and the control apparatus 5 according to this illustrative embodiment perform the following operations in order to allow selection of the home cell 11 which should be measured by the MUE 8. The home base station 1 transmits "cell information" to the control apparatus 5. The control apparatus 5 determines at least one measurement target cell which should be measured by the MUE 8 among the plurality of home cells 11 based on the cell information that is received. Then, the control apparatus 5 transmits the measurement request including the information capable of specifying the home cell 11 which is determined as the measurement target cell. Accordingly, the MUE 8 only has to perform the measurement of the radio resource used by the home cell 11 which is determined as the measurement target cell. Accordingly, it is possible to suppress degradation of communication performance and an increase of power consumption of the MUE 8.

Note that the control apparatus 5 may determine the home cell 11 (or the home base station 1) which is suspected that radio setting is not appropriately performed, and selects this cell as the measurement target by the MUE 8. Accordingly, it is only required that the cell information transmitted from the home base station 1 to the control apparatus 5 includes information available for determination of an interference level between the home cell 11 and the macrocell 12.

Specifically, it is only required that the cell information transmitted from the home base station 1 to the control apparatus 5 includes at least one of "information of the home cell 11" and "measurement information of the macrocell 12". The information of the home cell 11 includes radio parameters regarding the home cell 11 (e.g. transmission power of the downlink signal from the home base station 1, or interference level of the uplink signal in the home base station 1). The measurement information of the macrocell 12 includes radio parameters related to the macrocell 12 (e.g. reception power of the downlink signal from the macrocell 12, or information indicating whether the downlink signal can be received from the macrocell 12) measured by the home base station 1.

Meanwhile, the arrangement of the control apparatus 5 is determined appropriately based on the design concept of the network architecture. For example, when the mobile communication system according to the first illustrative embodiment is UMTS, as shown in Fig. 2, the function of the control apparatus 5 may be arranged in an RNC 152. Fig. 2 is a diagram showing a configuration example when the mobile communication system according to the first illustrative embodiment is applied to UMTS. In the example shown in Fig. 2, the home base station (HNB) 1 is connected to a core network 150 via an IP (Internet Protocol) network 153 and an HNB-GW 151. Further, the macro base station (MNB) 6 is connected to the core network 150 via the RNC 152. The HNB-GW 151 is arranged between the core network 150 and the home base station (HNB) 1, and relays control data including CFG 2 and user data between them. The RNC 152 is arranged between the core network 150 and the NMB 6, and relays user data and control data between them. Further, the RNC 152 performs management of the radio resource of the macrocell 12, and control of inter-cell movement of the mobile station 8-2 attached to the macrocell 12.

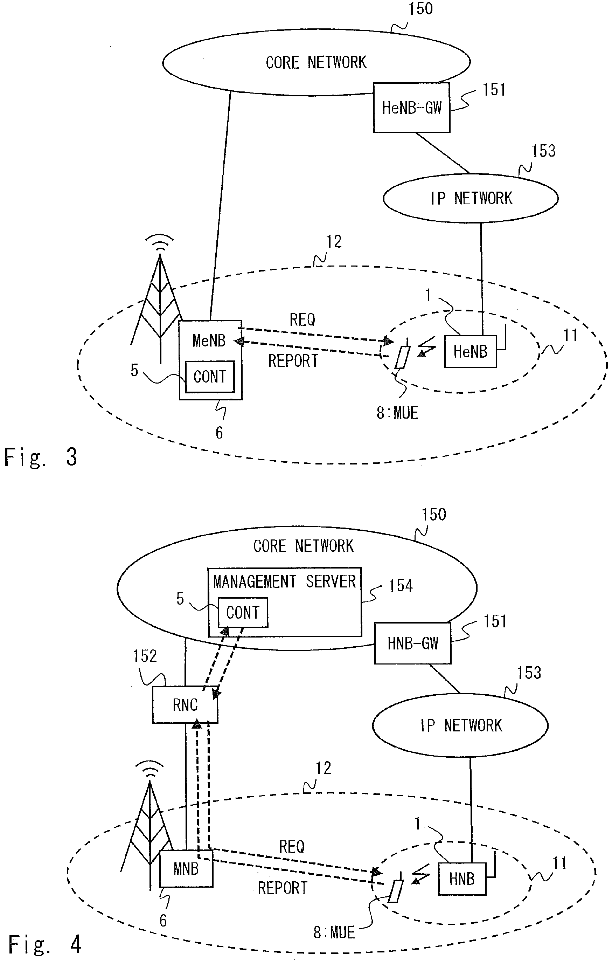

Further, when the mobile communication system according to the first illustrative embodiment is an EPS (Evolved Packet System), as shown in Fig. 3, the function of the control apparatus 5 may be integrally arranged with the macro base station (macro eNB (MeNB)) 6. Fig. 3 is a diagram showing a configuration example of the mobile communication system according to the first illustrative embodiment when the system is applied to the EPS.

Further, as shown in Fig. 4, the function of the control apparatus 5 may be arranged in a management server 154 in the core network 150. While shown in Fig. 4 is a case of UMTS, the same is applied to other mobile communication systems including the EPS.

Further, the functions of the control apparatus 5 may be arranged separately in the mobile communication system. For example, in the example of Fig. 4, the functions of receiving the cell information from the HNB 1 and generating the configuration information may be arranged in the management server 154, and the functions of transmitting the measurement request to the MUE 8 and receiving the measurement report may be arranged in the RNC 152.

In the following second to fourth illustrative embodiments, specific examples of methods of selecting the home cell 11 (home base station 1) which is to be measured by the MUE 8 will be described in detail. Although the second to fourth illustrative embodiments describe the case of UMTS/UTRAN in detail, these illustrative embodiments may naturally be applied to other systems including EPS (Evolved Packet System)/E-UTRAN.

### <Second illustrative embodiment>

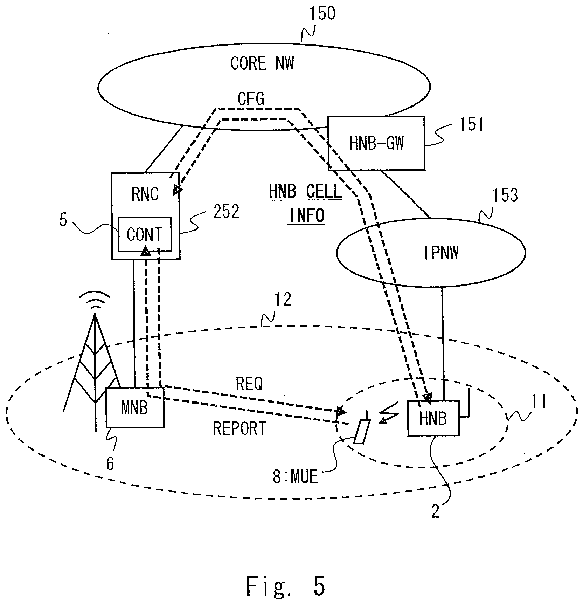

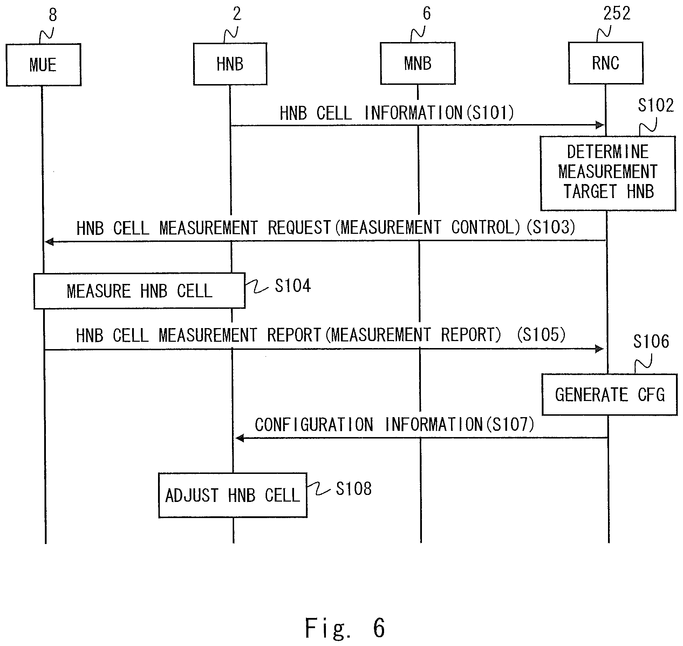

Fig. 5 shows a configuration example of a mobile communication system according to a second illustrative embodiment. In this illustrative embodiment, a home base station (HNB) 2 transmits "HNB cell information" including the information of the home cell (HNB cell) 11 to an RNC 252. Further, the RNC 252 executes the operation of the control apparatus 5 described above. In the following, an operation of the second illustrative embodiment will be described with reference to Fig. 6.

Fig. 6 is a sequence diagram showing procedures for supplying the configuration information to the HNB 2 according to this illustrative embodiment. In step S101, the HNB 2 transmits the "HNB cell information" including the information of the home cell 11 to the RNC 252. Specific examples of the radio parameters included in the HNB cell information include transmission power of the downlink signal of the HNB 2, the interference level of the uplink signal received by the HNB 2 and the like. Among them, the transmission power of the downlink signal of the HNB 2 may be used to evaluate the interference from the HNB cell 11 to the MUE 8. This is because large transmission power of the HNB 2 may be an interference factor to the downlink signal that arrives from the MNB 6 to the mobile station (e.g. MUE 8) which belongs to the macrocell (MNB cell) 12. On the other hand, the interference level of the uplink signal received by the HNB 2 can be used to evaluate the interference from the MUE 8 to the HNB cell 11.

In step S102, the RNC 252 determines the HNB cell 11 (or HNB 2) which should be measured by the MUE 8 based on the HNB cell information received from the HNB 2. For example, when the HNB cell information includes "transmission power of the downlink signal of the HNB 2", the HNB cell 11 where "transmission power of the downlink signal of the HNB 2" exceeds a predetermined reference value may be determined as the measurement target. This is because, in this case, there is a possibility that the interference from the HNB cell 11 to a nearby cell (including the MNB cell 12) exceeds an allowable range. Further, when the HNB cell information includes the "interference level of the uplink signal received by the HNB 2", the HNB cell 11 where "interference level of the uplink signal received by the HNB 2" exceeds a predetermined reference value may be determined as the measurement target. This is because, in this case, there is a possibility that the interference from the nearby cell (including the MNB cell 12) to the HNB cell 11 exceeds an allowable range.

In step S103, the RNC 252 transmits to the MUE 8 the HNB cell measurement request including the specification of the HNB cell (or HNB 2) selected as the measurement target. This request may be transmitted using "Measurement Control" which is one of radio resource control (RRC) messages, for example. The specification of the measurement target HNB may be performed using at least one of a radio frequency, a scrambling code, and a cell ID of the HNB cell. The HNB cell measurement request may include information indicating a period in which the transmission from the MNB 6 is stopped for the measurement of the HNB cell. Accordingly, the MUE 8 is able to perform accurate measurement with eliminating influence of the downlink signal from the MNB 6.

The RNC 252 may select the MUE 8 positioned near the measurement target HNB 2 which is the measurement target to transmit the measurement request. A GPS (global positioning system) may be used to determine the positions of the HNB 2 and the MUE 8. More specifically, a GPS (global positioning system) receiver may be provided in each of the HNB 2 and the MUE 8, and the RNC 252 or a server (not shown) arranged in the core network 150 may collect positional information of the HNB 2 and the MUE 8. Then, the MUE 8 located near the measurement target HNB 2 which is the may be selected by comparing the positional information of the HNB 2 with the positional information of the MUE 8.

Referring back to Fig. 6, the description will be continued. In step S104, the MUE 8 performs the measurement of the downlink signal from the HNB 2 specified by the HNB cell measurement request. In step S105, the MUE 8 reports the measurement result of the HNB cell 11 to the RNC 252. This measurement report may be performed using "Measurement Report" which is one of the radio resource control (RRC) messages, for example.

In step S106, the RNC 252 generates the configuration information (CFG) to be transmitted to the measurement target HNB 2 based on the HNB cell measurement report. Specifically, when the interference from the HNB cell 11 to the MNB cell 12 is too large, the CFG including the instruction to decrease the downlink transmission power of the HNB 2 may be generated. In contrast, when the interference from the MNB cell 12 to the HNB cell 11 is too large, the CFG including the instruction that allows the increase of the downlink transmission power of the HNB 2 may be generated.

In step S107, the RNC 252 transmits the configuration information (CFG) to the measurement target HNB 2 which is determined as the measurement target. As one example, the configuration information (CFG) may be transmitted to the HNB 2 via the core network 150, the HNB-GW 151, the IP network 153, and an access line between the IP network 153 and the HNB 2. Further, the configuration information (CFG) may be broadcasted to the MNB cell 12 from via the downlink radio channel. Further, these two transmission paths may be used together in order to transmit the configuration information (CFG).

Lastly, in step S108, the HNB 2 adjusts its own HNB cell 11 according to the configuration information (CFG) that arrives from the RNC 252.

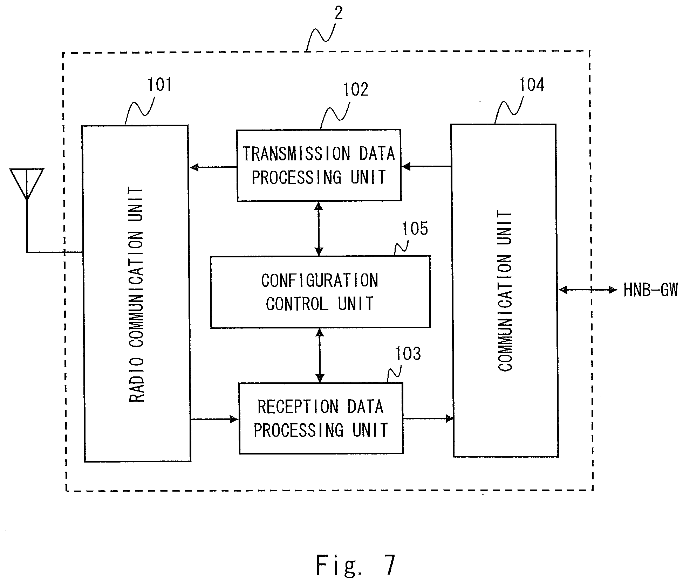

Subsequently, in the following description, with reference to Figs. 7 to 9, configuration examples of the HNB 2, the RNC 252, and the MUE 8 will be described. Fig. 7 is a block diagram showing an example of the configuration of the HNB 2. In Fig. 7, a radio communication unit 101 performs each processing including quadrature modulation, frequency conversion, and signal amplification on a transmission symbol sequence supplied from a transmission data processing unit 102 to generate a downlink signal, and transmits the downlink signal to the mobile station. Further, the radio communication unit 101 receives an uplink signal transmitted from the mobile station.

The transmission data processing unit 102 acquires from a communication unit 104 the transmission data transmitted to the mobile station, performs error correction coding, rate matching, interleaving or the like to generate a transport channel. Further, the transmission data processing unit 102 adds control information including a TPC (Transmit Power Control) bit or the like to data series of the transport channel to generate a radio frame. Further, the transmission data processing unit 102 performs spreading processing and symbol mapping to generate a transmission symbol sequence.

Further, upon receiving the configuration information (CFG) from the core network 150, the transmission data processing unit 102 transfers the CFG to a configuration control unit 105.

A reception data processing unit 103 performs each processing including de-spreading, RAKE synthesis, de-interleaving, channel decoding, and error correction of the uplink signal received by the radio communication unit 101 to restore the reception data. The resulting reception data is transferred to the HNB-GW 151 and the core network 150 via the communication unit 104.

Further, the radio communication unit 101 may include a function (Network Listen Mode) of receiving the downlink signal from a nearby base station such as the MNB 7. In this case, the radio communication unit 101 receives the downlink signal transmitted from the MNB 7 and performs measurement of the reception quality. Further, when the operation mode of the radio communication unit 101 is a mode (Network Listen Mode) to receive the downlink signal from the nearby base station, the reception data processing unit 103 may acquire the cell configuration information (CFG) from the reception data.

The configuration control unit 105 generates the HNB cell information, and transmits the HNB cell information to the core network 150 via the reception data processing unit 103 and the communication unit 104. Further, the configuration control unit 105 adjusts the radio parameters of the HNB cell 11 according to the configuration information (CFG) received by the transmission data processing unit 102 or the reception data processing unit 103.

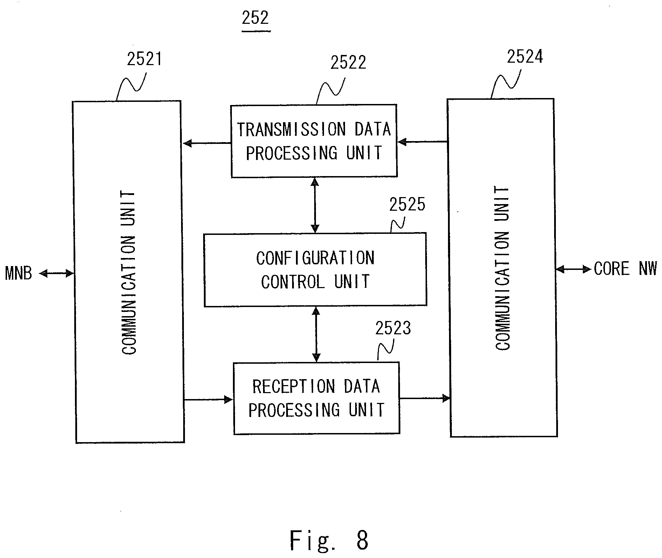

Fig. 8 is a block diagram showing a configuration example of the RNC 252. A communication unit 2521 transmits/receives user data and control data to/from the MNB 6. A transmission data processing unit 2522 acquires transmission data which is to be transmitted to the MUE 8 and the MNB 6 from a communication unit 2524. Further, upon receiving the configuration information (CFG) from a configuration control unit 2525, the transmission data processing unit 2522 notifies the MNB cell 12 of the configuration information (CFG) via the communication unit 2521 and the MNB 6.

A reception data processing unit 2523 transfers the data received from the communication unit 2521 to the core network 150 via the communication unit 2524. Further, upon receiving the configuration information (CFG) from the configuration control unit 2525, the reception data processing unit 2523 transmits the CFG to the destination HNB 2 via the communication unit 2524 and the core network 150.

The configuration control unit 2525 receives the HNB cell information from the HNB 2, and determines whether to select the source HNB 2 from which the information originates as the measurement target by the MUE 8 based on the information. The configuration control unit 2525 transmits the HNB cell measurement request including the specification of the HNB cell 11 (or HNB 2) selected as the measurement target to the MUE 8 via the transmission data processing unit 2522 and the communication unit 2521. The configuration control unit 2525 generates the configuration information (CFG) to be transmitted to the HNB 2 which is determined as the measurement target based on the HNB cell measurement report received from the MUE 8. Further, the configuration control unit 2525 transmits the configuration information (CFG) that is generated to the HNB 2 which is determined as the measurement target by the MUE 8.

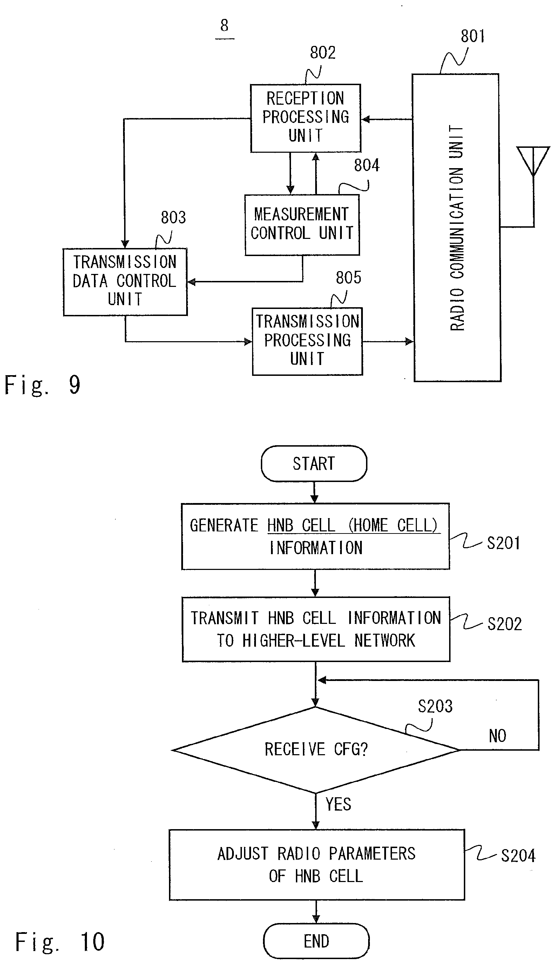

Fig. 9 is a block diagram showing a configuration example of the MUE 8 according to the second illustrative embodiment. Fig. 9 shows parts related to the measurement of the nearby HNB cell, and other components are omitted. In Fig. 9, a radio communication unit 801 performs radio communication with the MNB 6.

A reception processing unit 802 receives data from the MNB 6, and transfers the data to a measurement control unit 804 when the reception data is the HNB cell measurement request. Further, the reception processing unit 802 performs the measurement of the MNB cell 11 specified according to the measurement instruction from the measurement control unit 804, and reports the measurement result to the measurement control unit 804.

Upon receiving an HNB cell measurement request, the measurement control unit 804 instructs the reception processing unit 802 to measure the specified MNB cell 11. Further, the measurement control unit 804 receives the measurement result of the home cell 11 from the reception processing unit 802, and instructs a transmission data control unit 803 to transmit the measurement result to the RNC 552.

The transmission data control unit 803 executes start or stop of the uplink data transmission according to the instruction from the measurement control unit 804. A transmission processing unit 805 generates an uplink signal, and transmits the uplink signal to the MNB 6 via the radio communication unit 801.

In the following description, each operation of the HNB 2, the RNC 252, and the MUE 8 will be described with reference to a flowchart. Fig. 10 is a flowchart showing a specific example of the operation of the HNB 2. In step S201, the HNB 2 generates the HNB cell information regarding the HNB cell 11 that the HNB 2 generates. In step S202, the HNB 2 transmits the HNB cell information to the higher-level network (the IP network 153, the HNB-GW 152, and the core network 150). In step S203, the HNB 2 determines whether the configuration information (CFG) is received from the RNC 252. Upon receiving the CFG (YES in step S203), the HNB 2 adjusts the radio parameters of its own HNB cell 11 according to the CFG that is received (step S204).

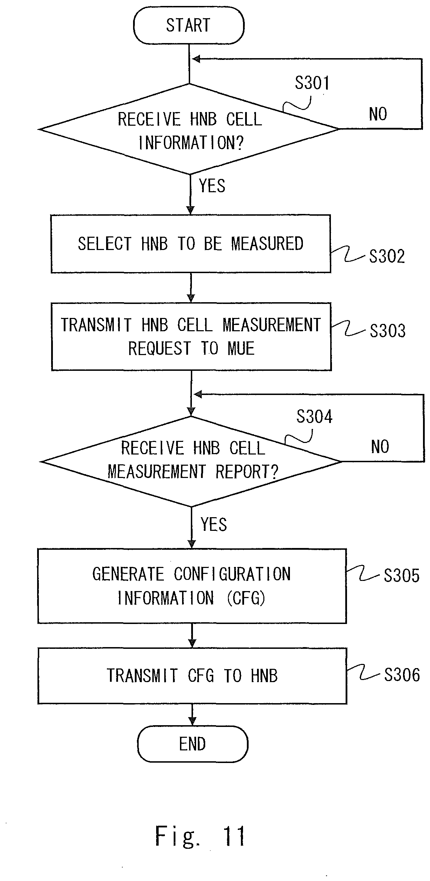

Fig. 11 is a flowchart showing a specific example of the operation of the RNC 252. In step S301, the RNC 252 determines whether the HNB cell information from the HNB 2 is received. Upon receiving the HNB cell information (YES in step S301), the RNC 252 performs selection of the measurement target HNB based on the HNB cell information that is received (step S302). In step S303, the HNB cell measurement request including the specification of the HNB cell 11 (or HNB 2) selected as the measurement target is transmitted to the MUE 8. In step S304, the RNC 252 determines whether the HNB cell measurement report from the MUE 8 is received. Upon receiving the HNB cell measurement report (YES in step S304), the RNC 252 generates the configuration information (CFG) regarding the measurement target HNB cell 11 based on the measurement report received from the MUE 8 (step S305). Lastly, in step S306, the RNC 252 transmits the CFG to the measurement target HNB 2.

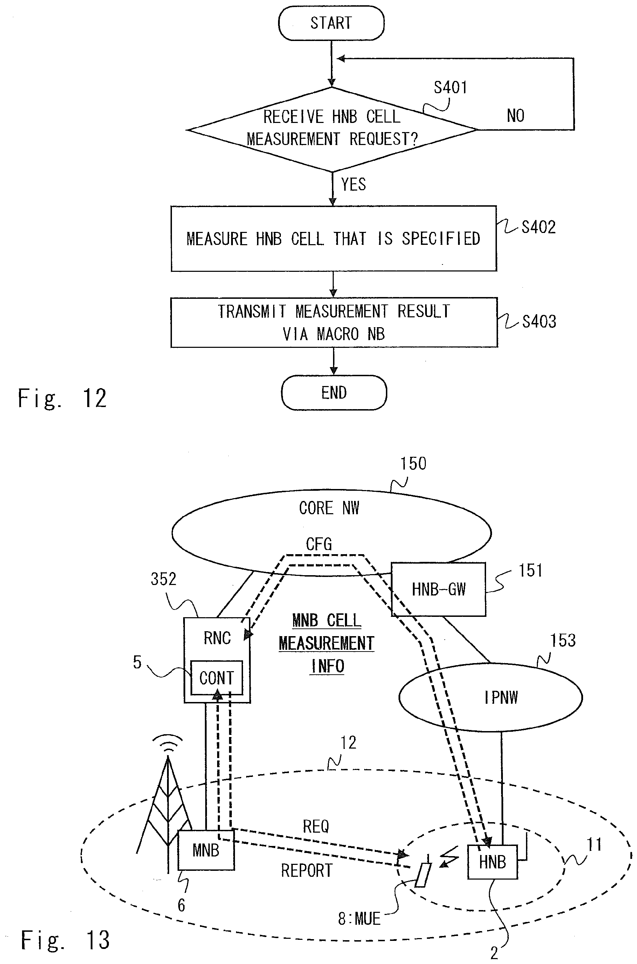

Fig. 12 is a flowchart showing a specific example of an operation of the MUE 8. In step S401, MUE 8 determines whether the HNB cell measurement request from the RNC 252 is received via the MNB 6. Upon receiving the HNB cell measurement request (YES in step S401), the MUE 8 measures the downlink signal that arrives from the HNB cell 11 specified by the measurement request. In step S403, the HNB cell measurement result is transmitted to the RNC 252 via the MNB 6.

As described above, in the second illustrative embodiment, the RNC 252 is able to determine the HNB cell 11 (or HNB 2) which is suspected that the setting of the radio parameters is not appropriate by referring to the "HNB cell information" transmitted from the HNB 2 to the RNC 252 (control apparatus 5). Accordingly, it is possible to narrow down the cell(s) which should be measured by the MUE 8.

### <Third illustrative embodiment>

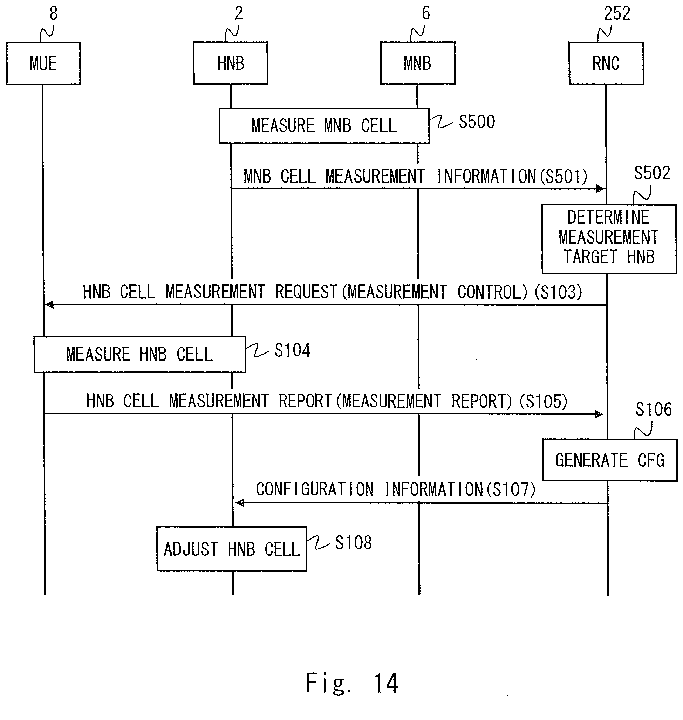

Fig. 13 shows a configuration example of a mobile communication system according to a third illustrative embodiment. In the third illustrative embodiment, a home base station (HNB) 3 transmits the "MNB cell measurement information" including the measurement information of the macrocell (MNB cell) 12 that the HNB 3 has measured to an RNC 352. Further, the RNC 352 executes the operation of the control apparatus 5 described above. In the following description, an operation according to the third illustrative embodiment will be described with reference to Fig. 14.

Fig. 14 is a sequence diagram showing procedures for supplying configuration information to the HNB 3 according to the third illustrative embodiment. In step S500, the HNB 3 performs the measurement of the nearby MNB cell 12. In step S501, the HNB 3 transmits the "MNB cell measurement information" including the measurement result of the MNB cell 12 to the RNC 352. Specific examples of the radio parameters included in the MNB cell measurement information include reception power of a downlink signal from the MNB cell 12, information indicating whether the downlink signal can be received from the MNB cell 12 and the like. They can be used to evaluate the interference from the MUE 8 to the HNB cell 11, and the interference from the HNB cell 11 to the MUE 8.

In step S502, the RNC 352 determines the HNB cell 11 (or HNB 3) which should be measured by the MUE 8 based on the MNB cell measurement information received from the HNB 3. For example, when the MNB cell measurement information includes "the reception power of the downlink signal from the MNB cell 12", the HNB cell 11 where "the reception power of the downlink signal from the MNB cell 12" exceeds a predetermined reference value may be determined as the measurement target. This is because, in this case, there is a possibility that the interference from the MNB cell 12 to the HNB cell 11 exceeds an allowable range.

Further, when the MNB cell measurement information includes "whether the downlink signal can be received from the MNB cell 12", the HNB cell 11 where the downlink signal from the MNB cell 12 cannot be received may be determined as the measurement target. The case in which the downlink signal cannot be received includes a case in which the reception level of a pilot signal (CPICH) is equal to or smaller than a threshold, or a case in which an SIB (System Information Block) cannot be received. This is because, in such cases, there is a possibility that the interference from the HNB cell 11 to the nearby cell (including the MNB cell 12) exceeds an allowable range.

Steps S103 to S108 in Fig. 14 are similar to steps S103 to S108 shown in Fig. 6.

In the following description, the operations of the HNB 3 and the RNC 352 will be described according to flowcharts. Since the measurement operation of the MNB cell 11 by the MUE 8 according to the third illustrative embodiment is similar to that of the second illustrative embodiment described above, the overlapping description will be omitted.

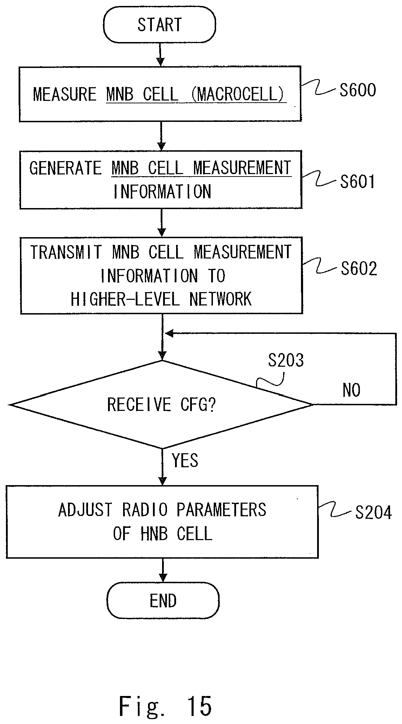

Fig. 15 is a flowchart showing a specific example of the operation of the HNB 3. In step S600, the HNB 3 performs the measurement of the MNB cell 12. In step S601, the HNB 3 generates the MNB cell measurement information including the measurement result in step S600. In step S602, the HNB 3 transmits the MNB cell measurement information that is generated to the higher-level network (the IP network 153, the HNB-GW 152, and the core network 150). The operations performed in steps S203 and S204 in Fig. 15 are similar to steps S203 and S204 shown in Fig. 10.

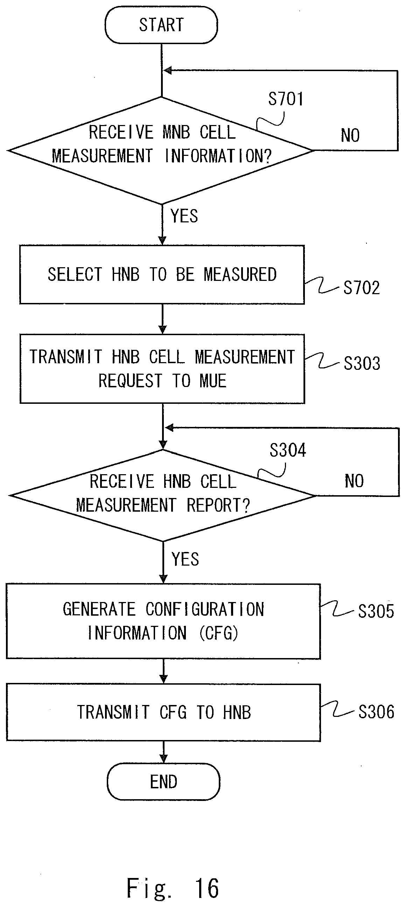

Next, Fig. 16 is a flowchart showing a specific example of an operation of the RNC 352. In step S701, the RNC 352 determines whether it received the MNB cell measurement information from the HNB 3. In step S702, the RNC 352 selects the measurement target HNB based on the MNB cell measurement information that is received. Step S303 to S306 shown in Fig. 16 are similar to steps S303 to S306 shown in Fig. 11.

As described above, according to the third illustrative embodiment, the RNC 352 is able to determine the HNB cell 11 (or HNB 3) which is suspected that the setting of the radio parameters is not appropriate by referring to the "MNB cell measurement information" transmitted from the HNB 3 to the RNC 352 (control apparatus 5). Accordingly, it is possible to narrow down the cell which should be measured by the MUE 8.

### <Fourth illustrative embodiment>

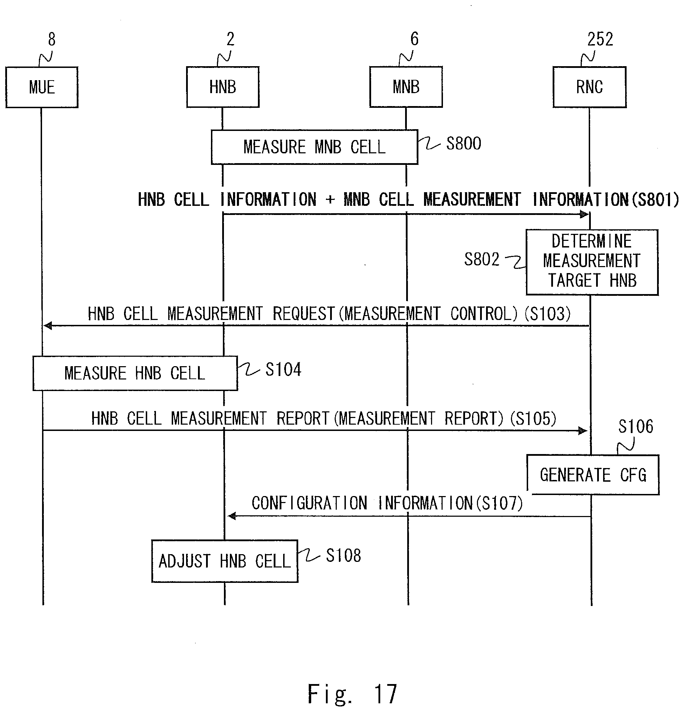

In a fourth illustrative embodiment, combinations of the second and third illustrative embodiments will be described. Specifically, according to this illustrative embodiment, a home base station (HNB) 4 transmits both of the "HNB cell information" and the "MNB cell measurement information" to an RNC 452. The RNC 452 determines the measurement target HNB in consideration of both of the "HNB cell information" and the "MNB cell measurement information". In the following, an operation according to this illustrative embodiment will be described with reference to Fig. 17.

Fig. 17 is a sequence diagram showing procedures for supplying configuration information to the HNB 4 according to this illustrative embodiment. In step S800, the HNB 4 performs the measurement of the MNB cell 12 formed by the MNB 6. In step S801, the HNB 4 transmits the "HNB cell information" regarding the HNB cell 11 formed by itself and the "MNB cell measurement information" including the measurement result of the MNB cell 12 to the RNC 452.

In step S802, the RNC 452 determines the HNB cell 11 (or HNB 4) which should be measured by the MUE 8 based on the MNB cell measurement information and the HNB cell information received from the HNB 4. Steps S103-S108 shown in Fig. 17 are similar to steps S103-S108 shown in Fig. 6.

Note that, in step S802, the RNC 452 may determine the final measurement target HNB cell using the determination result of the measurement target cell based on the HNB cell information and the determination result of the measurement target HNB cell based on the MNB cell measurement information. The procedures for determining the measurement target cell based on the HNB cell information is as described with reference to step S102 in Fig. 6 according to the second illustrative embodiment. Further, the procedures for determining the measurement target HNB cell based on the MNB cell measurement information is as described with reference to step S502 of Fig. 14 according to the third illustrative embodiment.

In one example, the RNC 452 may select, as the final measurement target, the HNB cell 11 included in both of the determination result of the measurement target cell based on the HNB cell information and the determination result of the measurement target HNB cell based on the MNB cell measurement information. This allows to narrow down the measurement target cell, whereby the measurement load of the MUE 8 may further be mitigated.

Further, in another example, the RNC 452 may select, as the measurement target, all the HNB cells 11 included in at least one of the determination result of the measurement target cell based on the HNB cell information and the determination result of the measurement target HNB cell based on the MNB cell measurement information. Accordingly, it is possible to comprehensively examine the HNB cell 11 which is suspected that the adjustment of the radio parameters may not appropriate, which can contribute to suppression of inter-cell interference and improvement of communication quality of the whole system.

### <Other illustrative embodiments>

In the second to fourth illustrative embodiments, the case of UMTS has been described in detail. However, the method of selecting the measurement target home cell and the method of supplying the configuration information to the home base station described in these illustrative embodiments may be naturally applied to other systems including an EPS.

Processing performed in each apparatus (the control apparatus 5, the management server 154, the home base stations 1-4, the mobile station 8, and the RNCs 152, 252, 352, and 452) described in the above first to fourth illustrative embodiments may be achieved using a computer system including an ASIC (Application Specific Integrated Circuit), a DSP (Digital Signal Processor), an MPU (Micro Processing Unit) or a CPU (Central Processing Unit), or combinations thereof. More specifically, it is possible to cause a computer system to execute a program including instructions regarding processing procedures of each apparatus described using the sequence diagrams or the flowcharts.

These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Furthermore, the present invention is not limited to the illustrative embodiments described above, but various changes may be made to the present invention within the scope of the appended claims.

This application claims the benefit of priority from Japanese Patent Application No. 2009-229472 filed on October 1, 2009.

### Reference Signs List

- 1: HOME BASE STATION
- 2-4: HOME BASE STATION (HNB)
- 5: CONTROL APPARATUS
- 6: MACRO BASE STATION (M(e)NB)
- 8: MACRO MOBILE STATION (MUE)
- 11: HOME CELL
- 12: MACROCELL
- 150: CORE NETWORK
- 151: H(e)NB GATEWAY (H(e)NB-GW)
- 152, 252, 353, 452: RNC
- 153: IP NETWORK
- 154: MANAGEMENT SERVER

## Claims

1. A mobile communication system comprising:
at least one home base station (1);
a macro base station (6); and
control apparatus (5) configured to instruct a mobile station (8) connected to the macro base station (6) to measure a radio signal that arrives from the at least one home base station (1), and receive a measurement result from the mobile station (8), wherein
each of the at least one home base station (1) is configured to transmit first information including at least one of: one or more first radio parameters related to a home cell (11) formed by that home base station (1); and one or more second radio parameters related to a macro cell (12) formed by the macro base station (6) and measured by that home base station (1), and
the control apparatus (5) is configured to receive the first information from each of the at least one home base station (1), determine, from among the at least one home base station (1), based on the received first information, a suspected base station whose radio setting for its home cell (11) is suspected of not being appropriately made, and select the suspected base station as a target base station which is to be measured by the mobile station (8),
the control apparatus (5) is further configured to instruct the mobile station (8) to measure a radio signal transmitted by the target base station, and to receive a measurement result from the mobile station (8),
the control apparatus (5) is further configured to generate configuration information based on the measurement result from the mobile station (8) and supply the configuration information to the target base station as a response to the first information, and
the target base station is configured to receive the configuration information and adjust the radio setting for its home cell (11) according to the configuration information.

2. The mobile communication system according to Claim 1, wherein the control apparatus (5) is configured to transmit a measurement request including information for specifying a radio resource used by the target base station to the mobile station (8).

3. The mobile communication system according to Claim 1, wherein the mobile station (8) is configured to measure a downlink signal that arrives from the target base station specified based on the measurement request.

4. The mobile communication system according to any one of Claims 1 to 3, wherein the first information further includes at least one of information indicating a radio frequency used in the home cell (11) and identification information of the home cell (11).

5. The mobile communication system according to any one of Claims 1 to 4, wherein the one or more first radio parameters include transmission power of a downlink signal by that home base station (1).

6. The mobile communication system according to any one of Claims 1 to 5, wherein the one or more first radio parameters include an interference level of an uplink signal that is received from the mobile station (8) at that home base station (1).

7. The mobile communication system according to any one of Claims 1 to 6, wherein the one or more second radio parameters include reception power of a downlink signal transmitted from the macro base station (6).

8. The mobile communication system according to any one of Claims 1 to 7, wherein the one or more second radio parameters include information indicating whether the downlink signal transmitted from the macro base station (6) can be received.

9. The mobile communication system according to any one of Claims 1 to 8, wherein the first information arrives at the control apparatus (5) via a management apparatus that manages each of the at least one home base station (1).

10. A home base station apparatus (1) comprising:
radio communication means for performing radio communication with a mobile station (8) in a home cell (11);
higher-level network communication means (104) for performing communication with a control apparatus (5) in a higher-level network; and
configuration control means (105) for adjusting radio characteristics of the home cell (11),
wherein the configuration control means (105) is adapted to transmit to the control apparatus (5) first information including at least one of: one or more first radio parameters related to the home cell (11); and one or more second radio parameters related to a macro cell (12) formed by a macro base station (6) and measured by the home base station apparatus (1), the first information causing the control apparatus (5) to determine, from among the at least one home base station (1) including the home base station (1) apparatus, a suspected base station whose radio setting for its home cell (11) is suspected of not being appropriately made, and to select the suspected base station as a target base station which is to be measured by a mobile station (8) connected to the macro base station (6) different from the at least one home base station (1),
wherein the configuration control means (105) is further adapted to receive configuration information supplied from the control apparatus (5) as a response to the first information, the configuration information being generated based on a measurement result of a downlink signal from the home cell (11) measured by the mobile station (8), and
wherein the configuration control means (105) is further adapted to adjust the radio setting for its home cell (11) according to the configuration information.

11. The home base station apparatus (1) according to Claim 10, wherein the one or more first radio parameters include transmission power of a downlink signal by the base station apparatus.

12. The home base station apparatus (1) according to Claim 10 or 11, wherein the one or more first radio parameters include an interference level of an uplink signal that the base station apparatus receives from the mobile station (8).

13. The home base station apparatus (1) according to any one of Claims 10 to 12, wherein the one or more second radio parameters include reception power of a downlink signal transmitted from the macro base station (6).

14. The home base station apparatus (1) according to any one of Claims 10 to 13, wherein the one or more second radio parameters include information indicating whether the downlink signal transmitted from the macro base station (6) can be received.

15. A control apparatus (5) for instructing a mobile station (8) connected to a macro base station (6) to measure a radio signal that arrives from at least one home base station (1) and receiving a measurement result from the mobile station (8), the control apparatus (5) comprising:
control means (2525) for receiving first information from each of the at least one home base station (1),the first information from each home base station (1) including at least one of: one or more first radio parameters related to a home cell (11) formed by the home base station (1) from which the first information originates; and one or more second radio parameters related to a macro cell (12) formed by the macro base station (6) and measured by the home base station (1) from which the first information originates, wherein
the control means (2525) is further adapted to determine, from among the at least one home base station (1), based on the received first information, a suspected base station whose radio setting for its home cell (11) is suspected of not being appropriately made, and select the suspected base station as a target base station which is to be measured by the mobile station (8),
the control means (2525) is further adapted to instruct the mobile station (8) to measure a radio signal transmitted by the target base station, and to receive a measurement result from the mobile station (8), and
the control means (2525) is further adapted to generate configuration information based on the measurement result from the mobile station (8) and supply the configuration information to the target base station as a response to the first information in order to instruct the target base station to adjust the radio setting for its home cell (11) according to the configuration information.

16. The control apparatus (5) according to Claim 15, wherein the control means (2525) is adapted to transmit a measurement request including information for specifying a radio resource used by the target base station to the mobile station (8).

17. The control apparatus (5) according to Claim 15 or 16, wherein the one or more first radio parameters include at least one of transmission power of a downlink signal by the home base station (1) from which the first information originates, and an interference level of an uplink signal that is received from the mobile station (8) at the home base station (1) from which the first information originates.

18. The control apparatus (5) according to any one of Claims 15 to 17, wherein the one or more second radio parameters include at least one of reception power of a downlink signal transmitted from the macro base station (6), and information indicating whether a downlink signal transmitted from the macro base station (6) can be received.

19. A method of controlling a home base station apparatus (1) configured to form a home cell (11), the method comprising
transmitting to a control apparatus (5) in a higher-level network first information including at least one of: one or more first radio parameters related to the home cell (11); and one or more second radio parameters related to a macro cell (12) formed by a macro base station (6) and measured by the home base station apparatus (1), the first information causing the control apparatus (5) to determine, from among at least one home base station (1) including the home base station apparatus (1), a suspected base station whose radio setting for its home cell (11) is suspected of not being appropriately made, and to select the suspected base station as a target base station which is to be measured by a mobile station (8) connected to the macro base station (6) different from the at least one home base station (1);
receiving configuration information supplied from the control apparatus (5) as a response to the first information, the configuration information being generated based on a measurement result of a downlink signal from the home cell (11) measured by the mobile station (8); and
adjusting the radio setting for its home cell (11) according to the configuration information.

20. A method of controlling a control apparatus (5) for instructing a mobile station (8) connected to a macro base station (6) to measure a radio signal that arrives from at least one home base station (1) and for receiving a measurement result from the mobile station (8), the method comprising:
receiving first information from each of the at least one home base station (1), the first information from each home base station (1) including at least one of: one or more first radio parameters related to a home cell (11) formed by the home base station (1) from which the first information originates; and one or more second radio parameters related to a macro cell (12) formed by the macro base station (6) and measured by the home base station (1) from which the first information originates;
determining, from among the at least one home base station (1), based on the received first information, a suspected base station whose radio setting for its home cell (11) is suspected of not being appropriately made, and selecting the suspected base station as a target base station which is to be measured by the mobile station (8);
instructing the mobile station (8) to measure a radio signal transmitted by the target base station, and receiving a measurement result from the mobile station (8); and
generating configuration information based on the measurement result from the mobile station (8) and supplying the configuration information to the target base station as a response to the first information in order to instruct the target base station to adjust the radio setting for its home cell (11) according to the configuration information.

## Patentansprüche

1. Mobilkommunikationssystem, das aufweist:
wenigstens eine Heimbasisstation (1);
eine Makrobasisstation (6); und
eine Steuervorrichtung (5), die dazu ausgestaltet ist, eine Mobilstation (8), die mit der Makrobasisstation (6) verbunden ist, anzuweisen, ein Funksignal zu messen, das von der wenigstens einen Heimbasisstation (1) ankommt, und ein Messergebnis von der Mobilstation (8) zu empfangen, wobei
eine jede der wenigstens einen Heimbasisstation (1) dazu ausgestaltet ist, erste Informationen zu übertragen, die wenigstens einen aufweisen von: einem oder mehreren ersten Funkparametern, die sich auf eine Heimzelle (11) beziehen, die durch die Heimbasisstation (1) gebildet wird; und einem oder mehreren zweiten Funkparametern, die sich auf eine Makrozelle (12) beziehen, die durch die Makrobasisstation (6) gebildet wird, und die von der Heimbasisstation (1) gemessen werden, und
die Steuervorrichtung (5) dazu ausgestaltet ist, die ersten Informationen von einer jeden der wenigstens einen Heimbasisstation (1) zu empfangen, basierend auf den empfangenen ersten Informationen aus der wenigstens einen Heimbasisstation (1) eine verdächtige Basisstation zu bestimmen, deren Funkeinstellung für ihre Heimzelle (11) unter dem Verdacht steht, dass sie nicht in geeigneter Weise vorgenommen wurde, und die verdächtige Basisstation als Zielbasisstation auszuwählen, die von der Mobilstation (8) zu messen ist,
die Steuervorrichtung (5) weiterhin dazu ausgestaltet ist, die Mobilstation (8) anzuweisen, ein von der Zielbasisstation übertragenes Funksignal zu messen, und ein Messergebnis von der Mobilstation (8) zu empfangen,
die Steuervorrichtung (5) weiterhin dazu ausgestaltet ist,
Konfigurationsinformationen basierend auf dem Messergebnis von der Mobilstation (8) zu generieren und als Reaktion auf die ersten Informationen die Konfigurationsinformationen der Zielbasisstation bereitzustellen, und
die Zielbasisstation dazu ausgestaltet ist, die Konfigurationsinformationen zu empfangen und die Funkeinstellung für ihre Heimzelle (11) gemäß den Konfigurationsinformationen anzupassen.

2. Mobilkommunikationssystem nach Anspruch 1, wobei die Steuervorrichtung (5) dazu ausgestaltet ist, eine Messanforderung an die Mobilstation (8) zu übertragen, die Informationen zur Angabe einer Funkressource enthält, die von der Zielbasisstation verwendet wird.

3. Mobilkommunikationssystem nach Anspruch 1, wobei die Mobilstation (8) dazu ausgestaltet ist, ein Abwärtsstreckensignal zu messen, das von der Zielbasisstation ankommt, die basierend auf der Messanforderung angegeben wurde.

4. Mobilkommunikationssystem nach einem der Ansprüche 1 bis 3, wobei die ersten Informationen weiterhin wenigstens eine von den Informationen aufweisen, die eine in der Heimzelle (11) verwendete Funkfrequenz und Identifizierungsinformationen der Heimzelle (11) angeben.

5. Mobilkommunikationssystem nach einem der Ansprüche 1 bis 4, wobei der eine oder die mehreren ersten Funkparameter eine Übertragungsstärke eines Abwärtsstreckensignals durch die Heimbasisstation (1) aufweisen.

6. Mobilkommunikationssystem nach einem der Ansprüche 1 bis 5, wobei der eine oder die mehreren ersten Funkparameter einen Interferenzlevel eines Aufwärtsstreckensignals aufweisen, das von der Mobilstation (8) an der Heimbasisstation (1) empfangen wurde.

7. Mobilkommunikationssystem nach einem der Ansprüche 1 bis 6, wobei der eine oder die mehreren zweiten Funkparameter eine Empfangsstärke eines Abwärtsstreckensignals aufweisen, das von der Makrobasisstation (6) übertragen wurde.

8. Mobilkommunikationssystem nach einem der Ansprüche 1 bis 7, wobei der eine oder die mehreren zweiten Funkparameter Informationen aufweisen, die angeben, ob das von der Makrobasisstation (6) übertragene Abwärtsstreckensignal empfangen werden kann.

9. Mobilkommunikationssystem nach einem der Ansprüche 1 bis 8, wobei die ersten Informationen an der Steuervorrichtung (5) über eine Verwaltungsvorrichtung ankommen, die eine jede der wenigstens einen Heimbasisstation (1) verwaltet.

10. Heimbasisstationsvorrichtung (1), die aufweist:
eine Funkkommunikationseinrichtung zum Durchführen der Funkkommunikation mit einer Mobilstation (8) in einer Heimzelle (11);
eine übergeordnete Netzwerkkommunikationseinrichtung (104) zum Durchführen der Kommunikation mit einer Steuervorrichtung (5) in einem übergeordneten Netzwerk; und
eine Konfigurationssteuerungseinrichtung (105) zum Anpassen der Funkeigenschaften der Heimzelle (11),
wobei die Konfigurationssteuereinrichtung (105) dazu ausgelegt ist, erste Informationen an die Steuervorrichtung (5) zu übertragen, die wenigstens einen aufweisen von: einem oder mehreren auf die Heimzelle (11) bezogenen ersten Funkparametern; und einem oder mehreren zweiten Funkparametern, die sich auf eine von einer Makrobasisstation (6) gebildete Makrozelle (12) beziehen und von der Heimbasisstationsvorrichtung (1) gemessen werden, wobei die ersten Informationen die Steuervorrichtung (5) dazu veranlassen, aus der wenigstens einen Heimbasisstation (1), die die Heimbasisstation (1)-Vorrichtung aufweist, eine verdächtige Basisstation zu bestimmen, deren Funkeinstellung für ihre Heimzelle (11) unter dem Verdacht steht, dass sie nicht in geeigneter Weise vorgenommen wurde, und die unter Verdacht stehende Basisstation als Zielbasisstation auszuwählen, die durch eine mit der Makrobasisstation (6) verbundene Mobilstation (8) zu messen ist, die sich von der wenigstens einen Heimbasisstation (1) unterscheidet,
wobei die Konfigurationssteuereinrichtung (105) weiterhin dazu ausgelegt ist, Konfigurationsinformationen zu empfangen, die von der Steuervorrichtung (5) als Reaktion auf die ersten Informationen bereitgestellt wurden, wobei die Konfigurationsinformationen basierend auf einem Messergebnis eines Abwärtsstreckensignals von der Heimzelle (11) generiert werden, das von der Mobilstation (8) gemessen wurde, und
wobei die Konfigurationssteuereinrichtung (105) weiterhin dazu ausgelegt ist, die Funkeinstellung für ihre Heimzelle (11) gemäß den Konfigurationsinformationen anzupassen.

11. Heimbasisstationsvorrichtung (1) nach Anspruch 10, wobei der eine oder die mehreren ersten Funkparameter eine Übertragungsleistung eines Abwärtsstreckensignals durch die Basisstationsvorrichtung aufweisen.

12. Heimbasisstationsvorrichtung (1) nach Anspruch 10 oder 11, wobei der eine oder die mehreren ersten Funkparameter einen Interferenzlevel eines Aufwärtsstreckensignals aufweisen, das die Basisstationsvorrichtung von der Mobilstation (8) empfängt.

13. Heimbasisstationsvorrichtung (1) nach einem der Ansprüche 10 bis 12, wobei der eine oder die mehreren zweiten Funkparameter eine Empfangsstärke eines Abwärtsstreckensignals enthalten, das von der Makrobasisstation (6) übertragen wurde.

14. Heimbasisstationsvorrichtung (1) nach einem der Ansprüche 10 bis 13, wobei der eine oder die mehreren zweiten Funkparameter Informationen aufweisen, die angeben, ob das von der Makrobasisstation (6) übertragene Abwärtsstreckensignal empfangen werden kann.

15. Steuervorrichtung (5), um eine Mobilstation (8) anzuweisen, die mit einer Makrobasisstation (6) verbunden ist, ein Funksignal zu messen, das von wenigstens einer Heimbasisstation (1) ankommt, und ein Messergebnis von der Mobilstation (8) zu empfangen, wobei die Steuervorrichtung (5) aufweist:
eine Steuereinrichtung (2525) zum Empfangen von ersten Informationen von einer jeden der wenigstens einen Heimbasisstation (1), wobei die ersten Informationen von jeder Heimbasisstation (1) wenigstens einen aufweisen von: einem oder mehreren ersten Funkparametern, die sich auf eine Heimzelle (11) beziehen, die durch die Heimbasisstation (1) gebildet wird, von der die ersten Informationen stammen; und einem oder mehreren zweiten Funkparametern, die sich auf eine Makrozelle (12) beziehen, die durch die Makrobasisstation (6) gebildet wird, und von der Heimbasisstation (1) gemessen werden, von der die ersten Informationen stammen, wobei
die Steuereinrichtung (2525) weiterhin dazu ausgestaltet ist, basierend auf den empfangenen ersten Informationen aus der wenigstens einen Heimbasisstation (1) eine verdächtige Basisstation zu bestimmen, deren Funkeinstellung für die Heimzelle (11) unter dem Verdacht steht, dass sie nicht in geeigneter Weise vorgenommen wurde, und die verdächtige Basisstation als eine Zielbasisstation auszuwählen, die von der Mobilstation (8) zu messen ist,
wobei die Steuereinrichtung (2525) weiterhin dazu ausgelegt ist, die Mobilstation (8) anzuweisen, ein von der Zielbasisstation übertragenes Funksignal zu messen, und ein Messergebnis von der Mobilstation (8) zu empfangen, und
die Steuereinrichtung (2525) weiterhin dazu ausgelegt ist, Konfigurationsinformationen basierend auf dem Messergebnis von der Mobilstation (8) zu generieren und die Konfigurationsinformationen der Zielbasisstation als eine Reaktion auf die ersten Informationen bereitstellen, um die Zielbasisstation anzuweisen, die Funkeinstellung für ihre Heimzelle (11) gemäß den Konfigurationsinformationen anzupassen.

16. Steuervorrichtung (5) nach Anspruch 15, wobei die Steuereinrichtung (2525) dazu ausgelegt ist, eine Messanforderung an die Mobilstation (8) zu übertragen, die Informationen zur Angabe einer Funkressource enthält, die von der Zielbasisstation verwendet wird.

17. Steuervorrichtung (5) nach Anspruch 15 oder 16, wobei der eine erste oder die mehreren ersten Funkparameter wenigstens eines aufweisen von einer Übertragungsstärke eines Abwärtsstreckensignals von der Heimbasisstation (1), von der die erste Information stammt, und einem Interferenzlevel eines Abwärtsstreckensignals, das von der Mobilstation (8) an der Heimbasisstation (1) empfangen wird, von der die erste Information stammt.

18. Steuervorrichtung (5) nach einem der Ansprüche 15 bis 17, wobei der eine zweite oder die mehreren zweiten Funkparameter wenigstens eines von der Empfangsstärke eines Abwärtsstreckensignals, das von der Makrobasisstation (6) übertragen wurde, und Informationen aufweisen, die angeben, ob ein von der Makrobasisstation (6) übertragenes Abwärtsstreckensignal empfangen werden kann.

19. Verfahren zum Steuern einer Heimbasisstationsvorrichtung (1), die dazu ausgestaltet ist, eine Heimzelle (11) zu bilden, wobei das Verfahren aufweist Übertragen an eine Steuervorrichtung (5) in einem übergeordneten Netzwerk von ersten Informationen, die wenigstens einen aufweisen von: einem oder mehreren auf die Heimzelle (11) bezogenen ersten Funkparametern; und einem oder mehreren zweiten Funkparametern, die sich auf eine von einer Makrobasisstation (6) gebildete Makrozelle (12) beziehen und von der Heimbasisstationsvorrichtung (1) gemessen werden, wobei die ersten Informationen die Steuervorrichtung (5) dazu veranlassen, aus der wenigstens einen Heimbasisstation (1), die die Heimbasisstationsvorrichtung (1) aufweist, eine verdächtige Basisstation zu bestimmen, deren Funkeinstellung für ihre Heimzelle (11) unter dem Verdacht steht, dass sie nicht in geeigneter Weise vorgenommen wurde, und die unter Verdacht stehende Basisstation als Zielbasisstation auszuwählen, die durch eine mit der Makrobasisstation (6) verbundene Mobilstation (8) zu messen ist, die sich von der wenigstens einen Heimbasisstation (1) unterscheidet;
Empfangen von Konfigurationsinformationen, die von der Steuervorrichtung (5) als Reaktion auf die ersten Informationen bereitgestellt werden, wobei die Konfigurationsinformationen basierend auf einem Messergebnis eines Abwärtsstreckensignals von der Heimzelle (11), das von der Mobilstation (8) gemessen wurde, generiert werden; und
Anpassen der Funkeinstellung für ihre Heimzelle (11) gemäß den Konfigurationsinformationen.

20. Verfahren zum Steuern einer Steuervorrichtung (5), um eine Mobilstation (8), die mit einer Makrobasisstation (6) verbunden ist, anzuweisen, ein Funksignal zu messen, das von wenigstens einer Heimbasisstation (1) ankommt, und ein Messergebnis von der Mobilstation (8) zu empfangen, wobei das Verfahren aufweist:
Empfangen von ersten Informationen von einer jeden der wenigstens einen Heimbasisstation (1), wobei die ersten Informationen wenigstens einen aufweisen von: einem oder mehreren ersten Funkparametern, die sich auf eine Heimzelle (11) beziehen, die durch die Heimbasisstation (1) gebildet wird, von der die ersten Informationen stammen; und einem oder mehreren zweiten Funkparametern, die sich auf eine Makrozelle (12) beziehen, die durch die Makrobasisstation (6) gebildet wird, und von der Heimbasisstation (1), von der die ersten Informationen stammen, gemessen werden:
Bestimmen basierend auf den empfangenen ersten Informationen aus der wenigstens einen Heimbasisstation (1) einer verdächtigen Basisstation, deren Funkeinstellung für ihre Heimzelle (11) unter dem Verdacht steht, dass sie nicht in geeigneter Weise vorgenommen wurde, und Auswählen der verdächtigen Basisstation als eine Zielbasisstation, die von der Mobilstation (8) zu messen ist, Anweisen der Mobilstation (8), ein von der Zielbasisstation übertragenes Funksignal zu messen, und Empfangen des Messergebnisses von der Mobilstation (8); und
Generieren von Konfigurationsinformationen basierend auf dem Messergebnis von der Mobilstation (8) und Bereitstellen der Konfigurationsinformationen für die Zielbasisstation als Reaktion auf die ersten Informationen, um die Zielbasisstation anzuweisen, die Funkeinstellung für ihre Heimzelle (11) gemäß den Konfigurationsinformationen anzupassen.

## Revendications

1. Système de communication mobile, comprenant :
au moins une station de base d'attache (1) ;
une macrostation de base (6) ; et
un appareil de commande (5) configuré pour donner l'instruction à une station mobile (8) connectée à la macrostation de base (6) de mesurer un signal radio qui provient de l'au moins une station de base d'attache (1), et recevoir un résultat de mesure de la station mobile (8), dans lequel
chacune de l'au moins une station de base d'attache (1) est configurée pour transmettre des premières informations incluant au moins l'un parmi : un ou plusieurs premiers paramètres radio relatifs à une cellule d'attache (11) formée par cette station de base d'attache (1) ; et un ou plusieurs seconds paramètres radio relatifs à une macrocellule (12) formée par la macrostation de base (6) et mesurés par cette station de base d'attache (1), et
l'appareil de commande (5) est configuré pour recevoir les premières informations de chacune de l'au moins une station de base d'attache (1), déterminer, parmi l'au moins une station de base d'attache (1), d'après les premières informations reçues, une station de base suspectée dont le réglage radio quant à sa cellule d'attache (11) est suspecté de ne pas être réalisé de manière appropriée, et sélectionner la station de base suspectée en tant que station de base cible qui doit être mesurée par la station mobile (8),
l'appareil de commande (5) est en outre configuré pour donner l'instruction à la station mobile (8) de mesurer un signal radio transmis par la station de base cible, et pour recevoir un résultat de mesure de la station mobile (8),
l'appareil de commande (5) est en outre configuré pour générer des informations de configuration d'après le résultat de mesure de la station mobile (8) et fournir les informations de configuration à la station de base cible en guise de réponse aux premières informations, et
la station de base cible est configurée pour recevoir les informations de configuration et ajuster le réglage radio quant à sa cellule d'attache (11) selon les informations de configuration.

2. Système de communication mobile selon la revendication 1, dans lequel l'appareil de commande (5) est configuré pour transmettre une demande de mesure incluant des informations pour spécifier une ressource radio utilisée par la station de base cible à la station mobile (8).

3. Système de communication mobile selon la revendication 1, dans lequel la station mobile (8) est configurée pour mesurer un signal de liaison descendante qui provient de la station de base cible spécifiée d'après la demande de mesure.

4. Système de communication mobile selon l'une quelconque des revendications 1 à 3, dans lequel les premières informations incluent en outre au moins l'une parmi des informations indiquant une fréquence radio utilisée dans la cellule d'attache (11) et des informations d'identification de la cellule d'attache (11).

5. Système de communication mobile selon l'une quelconque des revendications 1 à 4, dans lequel les un ou plusieurs premiers paramètres radio incluent une puissance de transmission d'un signal de liaison descendante par cette station de base d'attache (1).

6. Système de communication mobile selon l'une quelconque des revendications 1 à 5, dans lequel les un ou plusieurs premiers paramètres radio incluent un niveau d'interférence d'un signal de liaison montante qui est reçu de la station mobile (8) au niveau de cette station de base d'attache (1).

7. Système de communication mobile selon l'une quelconque des revendications 1 à 6, dans lequel les un ou plusieurs seconds paramètres radio incluent une puissance de réception d'un signal de liaison descendante transmis par la macrostation de base (6).

8. Système de communication mobile selon l'une quelconque des revendications 1 à 7, dans lequel les un ou plusieurs seconds paramètres radio incluent des informations indiquant si le signal de liaison descendante transmis par la macrostation de base (6) peut être reçu.

9. Système de communication mobile selon l'une quelconque des revendications 1 à 8, dans lequel les premières informations arrivent au niveau de l'appareil de commande (5) via un appareil de gestion qui gère chacune de l'au moins une station de base d'attache (1).

10. Appareil de station de base d'attache (1) comprenant :
un moyen de radiocommunication pour réaliser une radiocommunication avec une station mobile (8) dans une cellule d'attache (11) ;
un moyen de communication de réseau de niveau supérieur (104) pour réaliser une communication avec un appareil de commande (5) dans un réseau de niveau supérieur ; et
un moyen de commande de configuration (105) pour ajuster des caractéristiques radio de la cellule d'attache (11),
dans lequel le moyen de commande de configuration (105) est adapté pour transmettre à l'appareil de commande (5) des premières informations incluant au moins l'un parmi : un ou plusieurs premiers paramètres radio relatifs à la cellule d'attache (11) ; et un ou plusieurs seconds paramètres radio relatifs à une macrocellule (12) formée par une macrostation de base (6) et mesurés par l'appareil de station de base d'attache (1), les premières informations amenant l'appareil de commande (5) à déterminer, parmi l'au moins une station de base d'attache (1) incluant l'appareil de station de base d'attache (1), une station de base suspectée dont le réglage radio quant à sa cellule d'attache (11) est suspecté de ne pas être réalisé de manière appropriée, et sélectionner la station de base suspectée en tant que station de base cible qui doit être mesurée par une station mobile (8) connectée à la macrostation de base (6) différente de l'au moins une station de base d'attache (1),
dans lequel le moyen de commande de configuration (105) est en outre adapté pour recevoir des informations de configuration fournies par l'appareil de commande (5) en guise de réponse aux premières informations, les informations de configuration étant générées d'après un résultat de mesure d'un signal de liaison descendante provenant de la cellule d'attache (11) mesuré par la station mobile (8), et
dans lequel le moyen de configuration (105) est en outre adapté pour ajuster le réglage radio à sa cellule d'attache (11) selon les informations de configuration.

11. Appareil de station de base d'attache (1) selon la revendication 10, dans lequel les un ou plusieurs premiers paramètres radio incluent une puissance de transmission d'un signal de liaison descendante par l'appareil de station de base.

12. Appareil de station de base d'attache (1) selon la revendication 10 ou 11, dans lequel les un ou plusieurs premiers paramètres radio incluent un niveau d'interférence d'un signal de liaison montante que l'appareil de station de base reçoit de la station mobile (8).

13. Appareil de station de base d'attache (1) selon l'une quelconque des revendications 10 à 12, dans lequel les un ou plusieurs seconds paramètres radio incluent une puissance de réception d'un signal de liaison descendante transmis par la macrostation de base (6).

14. Appareil de station de base d'attache (1) selon l'une quelconque des revendications 10 à 13, dans lequel les un ou plusieurs seconds paramètres radio incluent des informations indiquant si le signal de liaison descendante transmis par la macrostation de base (6) peut être reçu.

15. Appareil de commande (5) pour donner l'instruction à une station mobile (8) connectée à une macrostation de base (6) de mesurer un signal radio qui provient d'au moins une station de base d'attache (1) et pour recevoir un résultat de mesure de la station mobile (8), l'appareil de commande (5) comprenant :
un moyen de commande (2525) pour recevoir des premières informations de chacune de l'au moins une station de base d'attache (1), les premières informations de chaque station de base d'attache (1) incluant au moins l'un parmi : un ou plusieurs premiers paramètres radio relatifs à une cellule d'attache (11) formée par la station de base d'attache (1) d'où sont issues les premières informations ; et un ou plusieurs seconds paramètres radio relatifs à une macrocellule (12) formée par la macrostation de base (6) et mesurés par la station de base d'attache (1) d'où sont issues les premières informations, dans lequel
le moyen de commande (2525) est en outre adapté pour déterminer, parmi l'au moins une station de base d'attache (1), d'après les premières informations reçues, une station de base suspectée dont le réglage radio quant à sa cellule d'attache (11) est suspecté de ne pas être réalisé de manière appropriée, et sélectionner la station de base suspectée en tant que station de base cible qui doit être mesurée par la station mobile (8),
le moyen de commande (2525) est en outre adapté pour donner l'instruction à la station mobile (8) de mesurer un signal radio transmis par la station de base cible, et pour recevoir un résultat de mesure de la station mobile (8), et
le moyen de commande (2525) est en outre adapté pour générer des informations de configuration d'après le résultat de mesure de la station mobile (8) et fournir les informations de configuration à la station de base cible en guise de réponse aux premières informations afin de donner l'instruction à la station de base cible d'ajuster le réglage radio quant à sa cellule d'attache (11) selon les informations de configuration.

16. Appareil de commande (5) selon la revendication 15, dans lequel le moyen de commande (2525) est adapté pour transmettre une demande de mesure incluant des informations visant à spécifier une ressource radio utilisée par la station de base cible à la station mobile (8).

17. Appareil de commande (5) selon la revendication 15 ou 16, dans lequel les un ou plusieurs premiers paramètres radio incluent au moins l'un parmi une puissance de transmission d'un signal de liaison descendante par la station de base d'attache (1) d'où sont issues les premières informations, et un niveau d'interférence d'un signal de liaison montante qui est reçu par la station mobile (8) au niveau de la station de base d'attache (1) d'où sont issues les premières informations.

18. Appareil de commande (5) selon l'une quelconque des revendications 15 à 17, dans lequel les uns ou plusieurs seconds paramètres radio incluent au moins l'un parmi une puissance de réception d'un signal de liaison descendante transmis par la macrostation de base (6), et des informations indiquant si un signal de liaison descendante transmis par la macrostation de base (6) peut être reçu.

19. Procédé de commande d'un appareil de station de base d'attache (1) configuré pour former une cellule d'attache (11), le procédé comprenant :
la transmission à un appareil de commande (5) dans des premières informations de réseau de niveau supérieur incluant au moins l'un parmi : un ou plusieurs premiers paramètres radio relatifs à la cellule d'attache (11) ; et un ou plusieurs seconds paramètres radio relatifs à une macrocellule (12) formée par une macrostation de base (6) et mesurés par l'appareil de station de base d'attache (1), les premières informations amenant l'appareil de commande (5) à déterminer, parmi au moins une station de base d'attache (1) incluant l'appareil de station de base d'attache (1), une station de base suspectée dont le réglage radio quant à sa cellule d'attache (11) est suspecté de ne pas être réalisé de manière appropriée, et à sélectionner la station de base suspectée en tant que station de base cible qui doit être mesurée par une station mobile (8) connectée à la macrostation de base (6) différente de l'au moins une station de base d'attache (1) ;
la réception d'informations de configuration fournies par l'appareil de commande (5) en guise de réponse aux premières informations, les informations de configuration étant générées d'après un résultat de mesure d'un signal de liaison descendante provenant de la cellule d'attache (11) mesuré par la station mobile (8) ; et
l'ajustement du réglage radio quant à sa cellule d'attache (11) selon les informations de configuration.

20. Procédé de commande d'un appareil de commande (5) pour donner l'instruction à une station mobile (8) connectée à une macrostation de base (6) de mesurer un signal radio qui provient d'au moins une station de base d'attache (1) et pour recevoir un résultat de mesure de la station mobile (8), le procédé comprenant :
la réception de premières informations de chacune de l'au moins une station de base d'attache (1), les premières informations de chaque station de base d'attache (1) incluant au moins l'un parmi : un ou plusieurs premiers paramètres radio relatifs à une cellule d'attache (11) formée par la station de base d'attache (1) d'où sont issues les premières informations ; et un ou plusieurs seconds paramètres radio relatifs à une macrocellule (12) formée par la macrostation de base (6) et mesurés par la station de base d'attache (1) d'où sont issues les premières informations ;
la détermination, parmi l'au moins une station de base d'attache (1), d'après les premières informations reçues, d'une station de base suspectée dont le réglage radio quant à sa cellule d'attache (11) est suspecté de ne pas être réalisé de manière appropriée, et la sélection de la station de base suspectée en tant que station de base cible qui doit être mesurée par la station mobile (8) ;
le fait de donner l'instruction à la station mobile (8) de mesurer un signal radio transmis par la station de base cible, et la réception d'un résultat de mesure de la station mobile (8) ; et
la génération d'informations de configuration d'après le résultat de mesure provenant de la station mobile (8) et la fourniture des informations de configuration à la station de base cible en guise de réponse aux premières informations afin de donner l'instruction à la station de base cible d'ajuster le réglage radio quant à sa cellule d'attache (11) selon les informations de configuration.
